**Europäisches Patentamt**

**European Patent Office**

**Office européen des brevets**

(11) Veröffentlichungsnummer: **0 155 571**

**A2**

## (12) EUROPÄISCHE PATENTANMELDUNG

(21) Anmeldenummer: **85102301.0**

(22) Anmeldetag: **01.03.85**

(51) Int. Cl.⁴: **H 04 B 1/58**

(30) Priorität: **17.03.84 DE 3409877**

(43) Veröffentlichungstag der Anmeldung:
**25.09.85 Patentblatt 85/39**

(84) Benannte Vertragsstaaten:
**AT BE CH DE FR GB IT LI LU NL SE**

(71) Anmelder: **Neumann Elektronik GmbH**
**Bülowstrasse 104 - 110**
**D-4330 Mülheim 1(DE)**

(72) Erfinder: **Neumann, Dirk, Dipl.-Ing.**
**Schemelsbruch 11**
**D-4330 Mülheim-Ruhr 1(DE)**

(74) Vertreter: **Feder, Heinz, Dr. et al,**
**Dominikanerstrasse 37**
**D-4000 Düsseldorf 11(DE)**

(54) **Einrichtung zur optimalen Anpassung einer Gabelschaltung an eine Fernmeldeleitung.**

(57) Eine Einrichtung zur optimalen Anpassung einer Gabelschaltung an eine Fernmeldeleitung. Die Gabelschaltung wird mit einem Nachbildungsnetzwerk abgeschlossen, das einstellbare Impedanzen enthält. Die optimale einzustellende Impedanz des Nachbildungsnetzwerkes wird mit einer an die Fernmeldeleitung anschließbaren Meßeinrichtung bestimmt, die folgende Einrichtungsteile enthält:

a) Eine Gabelschaltung, die mit der anzupassenden Gabelschaltung typengleich ist und die mit einem Nachbildungsnetzwerk abgeschlossen ist, das variable ansteuerbare Impedanzen enthält;

b) einen Mikrocomputer, dessen Steuersignale den Wert der Gesamtimpedanz des Nachbildungsnetzwerkes aufeinanderfolgend in vorgegebener Weise ändern;

c) einen an den einen Nebenzweig der Gabelschaltung angeschlossenen Signalgenerator zur Abgabe eines Prüfsignals mit konstantem Signalpegel;

d) einen an den anderen Nebenzweig der Gabelschaltung angeschlossenen Signalempfänger zur Messung des in Abhängigkeit von der Gabelübergangsdämpfung übertretenden Signalpegelanteils und zur Erzeugung eines von diesem Signalpegelanteil abhängigen Steuersignals, das dem Mikrocomputer zugeführt wird zum Vergleich aufeinanderfolgen der Meßwerte, zur Speicherung des Minimalmeßwertes und des zugeordneten Wertes der Gesamtimpedanz des Nachbildungsnetzwerkes;

e) Anzeigevorrichtungen für den optimalen Wert der Gesamtimpedanz des Nachbildungsnetzwerkes.

FIG.1

0155571

Einrichtung zur optimalen Anpassung einer Gabelschaltung
an eine Fernmeldeleitung.

Die Erfindung betrifft eine Einrichtung zur optimalen Anpassung einer Gabelschaltung an eine Fernmeldeleitung, bei der die mit ihrem bidirektionalen Hauptzweig an die Fernmeldeleitung angeschlossene Gabelschaltung an ihrer, dem Hauptzweig gegenüberliegenden Seite mit einem Nachbildungsnetzwerk mit einstellbarer Impedanz abschließbar ist.

Es ist bekannt, daß eine ideale Anpassung einer Gabelschaltung dann erzielt wird, wenn der komplexe Nachbildungswiderstand mit dem Eingangsscheinwiderstand der angeschlossenen Fernmeldeleitung übereinstimmt (s. Bergmann: "Lehrbuch der Fernmeldetechnik", Fachverlag Scheile & Schön GmbH, Berlin, 4. Aufl. 1978, S. 304 bis 306).

Die Anpassung von Gabelschaltungen an die Fernmeldeleitung ist, wenn eine optimale Anpassung erreicht werden soll, schwierig und kann nur von Fachleuten durchgeführt werden, weil durch aufwendige Messungen an jedem Anschluß Impedanzmessungen vorgenommen werden müssen, um den Eingangswiderstand der Fernmeldeleitung an die Gabelschaltung zu bestimmen und es müssen dann zur Erzielung der optimalen Anpassung bei der Verwendung von Nachbildungsnetzwerken mit einstellbarer Impedanz die Impedanzen entsprechend justiert werden.

Wenn dieser Aufwand vermieden werden soll und nur eine begrenzte Anzahl verschieden dimensionierter Nachbildungsnetzwerke verwendet werden, bleibt die Anpassung der Gabelschaltung unbefriedigend, was sich bekanntlich sehr nachteilig auf die Gabelübergangsdämpfung auswirkt.

Die Erzielung einer besonders hohen Gabelübergangsdämpfung ist aber vor allem dann von besonderer Bedeutung, wenn in bekannter Weise derartige Gabelschaltungen in bidirektionalen Verstärkerschaltungen eingesetzt werden, bei denen für die beiden Sprechrichtungen getrennte, in einer Gabelverstärkerschaltung angeordnete Verstärker vorgesehen sind.

Bei einer Fehlanpassung der Gabelschaltungen und einer entsprechend verminderten Gabelübergangsdämpfung ist in solchen Fällen aber der erzielbare Verstärkungsgrad sehr begrenzt, da bei zu hoher Verstärkung sehr leicht Rückkopplungsschwingungen in der Gabelverstärkerschaltung einsetzen können.

Es ist bekannt, bei derartigen Gabelverstärkerschaltungen für jede Sprechrichtung einen steuerbaren Verstärker vorzusehen und das Übertragungsverhalten der beiden in der Gabelverstärkerschaltung angeordneten Verstärker durch eine Steuereinrichtung zueinander gegensinnig derart zu steuern, daß die Summe beider Verstärkungen im logarithischen Maß den zweifachen Minimalwert der Gabelübergangsdämpfung nicht übersteigt (DE-OS 30 46 488).

Es ist weiterhin eine Schaltungsanordnung zum Ausgleich unterschiedlichen Dämpfungsverhaltens von Fernmeldeleitungen bekannt (DE-OS 32 26 279), bei der die Anpassung der Gabelschaltung an die Fernmeldeleitung insofern berücksichtigt wird, als die Verstärkungen in den beiden Verstärkern der Gabelverstärkerschaltung derart gegensinnig gesteuert wird, daß beim Einsetzen von Rückkopplungsschwingungen die Verstärkung des in der passiven Richtung wirksamen Verstärkers zurückgesteuert wird.

Aber auch bei derartigen Einrichtungen bleibt der Verstärkungsgrad infolge der Fehlanpassung der Gabelschaltung begrenzt.

Die der Erfindung zugrunde liegende Aufgabe bestand darin, eine Einrichtung zur optimalen Anpassung einer Gabelschaltung an eine Fernmeldeleitung zu schaffen, mit der diese Anpassung ohne großen Zeit- und Arbeitsaufwand von ungeschultem Personal durchgeführt werden kann.

Die Lösung dieser Aufgabe geschieht erfindungsgemäß mit einer Einrichtung, die die Merkmale aus dem kennzeichnenden Teil des Patentanspruchs 1 aufweist.

Die Erfindung geht von dem Grundgedanken aus, die maximale Gabelübergangsdämpfung durch die Messung für eine größere Anzahl von Impedanzwerten des die Gabelschaltung abschließenden Nachbildungsnetzwerkes zu bestimmen und dann am Nachbildungsnetzwerk den Impedanzwert fest einzustellen, der dem kleinsten gemessenen Wert der Gabelübergangsdämpfung entspricht.

Die erfindungsgemäße Meßeinrichtung dient also zunächst zur Bestimmung der maximalen Gabelübergangsdämpfung und des dieser Gabelübergangsdämpfung entsprechenden optimalen Impedanzwertes. Hierzu ist notwendig, daß die Meßeinrichtung eine Gabelschaltung enthält, die hinsichtlich ihrer Übertragungseigenschaften vergleichbar der Gabelschaltung ist, welche an die Fernmeldeleitung angeschlossen werden soll. Dies kann beispielsweise dadurch erreicht werden, daß die Gabelschaltung in der Meßeinrichtung vom gleichen Typ bzw. der gleichen Bauart ist wie die Gabelschaltung, welche an die Fernmeldeleitung angeschlossen werden soll. Das mittels der erfindungsgemäßen Meßeinrichtung ausgeübte Meßverfahren besteht darin, dem einen Nebenzweig der Gabelschaltung ein Prüfsignal mit konstantem Signalpegel zuzuführen und den in den anderen Nebenzweig der Gabelschaltung in Abhängigkeit von der Gabelübergangsdämpfung übertreten-den -------------------------------------------------------------------

Anteil des Signalpegels fortlaufend zu messen. Vor jeder dieser Messungen wird die variable ansteuerbare Impedanz des Nachbildungsnetzwerkes vom Mikrocomputer aus auf einen anderen Wert eingestellt. Die erhaltenen Meßwerte des übertretenden Anteils des Signalpegels werden miteinander verglichen und es wird jeweils der kleinere von zwei aufeinanderfolgenden Meßwerten sowie der ihm zugeordnete Impedanzwert gespeichert. Nach einer vorgegebenen Anzahl von Messungen wird aus dem kleinsten gemessenen Wert des Signalpegelanteils die entsprechende optimale Gabelübergangsdämpfung berechnet und diese sowie der ihr zugeordnete optimale Impedanzwert für das Nachbildungsnetzwerk an den Anzeigevorrichtungen der Meßeinrichtung angezeigt. Dieser Wert kann nun in einfacher Weise an einem Nachbildungsnetzwerk außerhalb der Meßeinrichtung eingestellt werden und dieses so justierte Nachbildungsnetzwerk dient zum Abschluß der Gabelschaltung, welche an die Fernmeldeleitung angeschlossen werden soll. Auf diese Weise kann eine optimale Anpassung dieser Gabelschaltung an die Fernmeldeleitung erreicht werden.

Vorteilhafte Ausführungsformen der erfindungsgemäßen Einrichtung sind in den Unteransprüchen beschrieben.

Besonders einfach läßt sich das mit der erfindungsgemäßen Einrichtung durchzuführende Meß- und Anpassungsverfahren durchführen, wenn die Einrichtung die Merkmale der Patentansprüche 2 und 3 aufweist. Wie weiter unten genauer beschrieben, kann dann das zum Abschluß der an die Fernmeldeleitung anzuschließenden Gabelschaltung dienende zugeordnete Nachbildungsnetzwerk so ausgebildet sein, daß durch eine einfache Betätigung von Einstellschaltern der an der Meßeinrichtung abgelesene optimale Impedanzwert eingestellt wird. Dies kann beispielsweise in der Weise geschehen, daß an der Meßeinrichtung der Impedanzwert in codierter Form als bestimmte Kombination von Widerständen und Kondensatoren, beispielsweise in Form von HEX-Zahlen, angezeigt wird. Die gleichen Zahlen befinden sich an den Einstellschaltern des zugeordneten Nachbildungsnetzwerkes, so daß die Einstellung der optimalen Impedanz ohne irgendwelche zusätzlichen Überlegungen oder Berechnungen durchgeführt werden kann.

Dadurch, daß die Meßeinrichtung einen Mikrocomputer aufweist, ist es möglich, daß in relativ kurzer Zeit eine große Anzahl der Optimierung dienende Einzelmessungen durchgeführt wird und die Ergebnisse miteinander verglichen werden. So können beispielsweise bei vier Widerständen und vier Kondensatoren, die einander parallelgeschaltet sind, 256 verschiedene Impedanzwerte eingestellt und zur Optimalisierung der Anpassung der Gabelschaltung verwendet werden. Diese 256 verschiedenen Werte für das Nachbildungsnetzwerk können gesteuert vom Mikrocomputer in etwa 3 Sekunden durchgeprüft werden.

Je nach dem Einsatzfall können die durch den Signalgenerator erzeugten Prüfsignale sehr unterschiedlicher Natur sein. Es kann ein Prüfsignal mit einer fest vorgegebenen Frequenz verwendet werden. Es können aber auch Prüfsignale mit mehreren Frequenzen verwendet werden, die gleichzeitig oder aufeinanderfolgend ausgesandt werden und die es erlauben, die Anpassung für einen gewissen Übertragungsbereich zu optimalisieren.

Im folgenden wird anhand der beigefügten Zeichnungen ein Ausführungsbeispiel für eine Einrichtung gemäß der Erfindung näher erläutert.

In den Zeichnungen zeigen:

Fig. 1 in einem Blockschaltbild die an die Fernmeldeleitung anschließbare Meßeinrichtung zur
Bestimmung der optimalen Gabelübergangsdämpfung
und des ihr zugeordneten Impedanzwertes des
Nachbildungsnetzwerkes;

Fig. 2a in schematischer Darstellung eine Ansicht der
Meßeinrichtung nach Fig. 1 von außen;

Fig. 2b in schematischer, teilweise als Blockschaltbild
ausgeführter Darstellung die an die Fernmeldeleitung anzuschließende Gabelschaltung mit dem
Nachbildungsnetzwerk mit einstellbarer Impedanz.

Fig. 3a in einer Darstellung analog Fig. 2a eine andere
Ausführungsform einer Meßeinrichtung nach Fig.1
von außen;

Fig. 3b in einer Darstellung analog Fig. 2b eine andere
Ausführungsform einer an die Fernmeldeleitung
anzuschließenden Gabelschaltung.

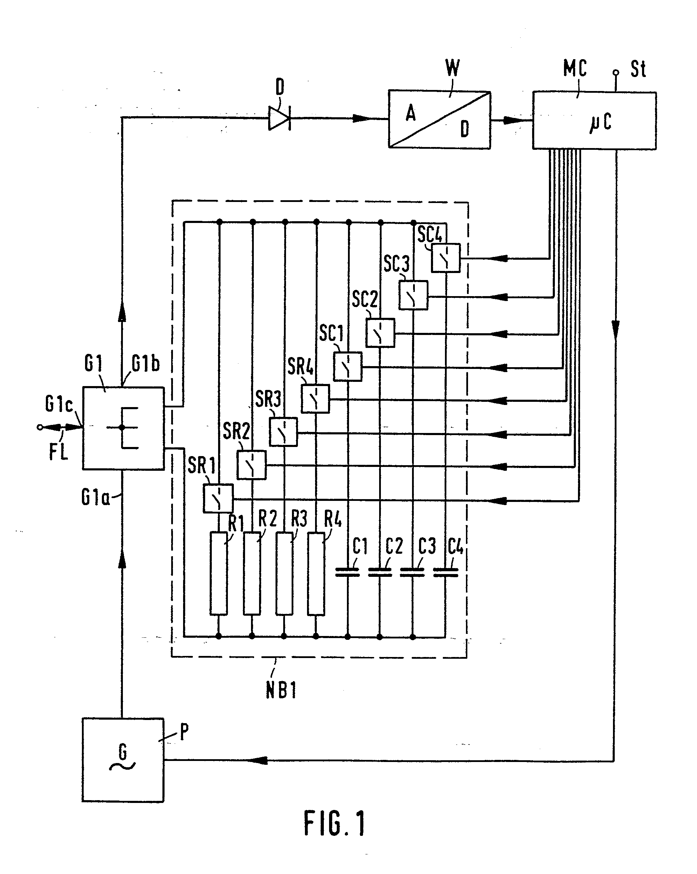

Die in Fig. 2a von außen und in Fig. 1 als Schaltbild
dargestellte Meßeinrichtung ME weist eine Gabelschaltung
G1 auf, die mit ihrem bidirektionalen Hauptzweig G1c an
die Fernsprechleitung FL angeschlossen wird. Die Gabelschaltung G1 ist an der dem Hauptzweig gegenüberliegenden Seite mit einem Nachbildungsnetzwerk NB1 abgeschlossen, das vier Widerstände R1 bis R4 und vier
Kondensatoren C1 bis C4 aufweist, die alle zueinander
parallelgeschaltet sind. In jeden der zu einem der
Widerstände R1 bis R4 oder Kondensatoren C1 bis C4
führenden Parallelzweige ist ein steuerbares Schaltelement SR1 bis SR4 bzw. SC1 bis SC4 eingeschaltet. Die
Steuereingänge dieser steuerbaren Schaltelemente sind
mit Steuereingängen eines Mikrocomputers MC verbunden.
Dadurch sind die Impedanzwerte des Nachbildungsnetzwerkes NB1 vom Mikrocomputer MC her einstellbar.

Der Mikrocomputer MC steuert gleichzeitig einen Signalgenerator P, der an den einen Nebenzweig G1a der Gabelschaltung G1 angeschlossen ist. Der andere Nebenzweig Glb der Gabelschaltung Gl ist über einen als Spitzenwertgleichrichter ausgebildeten Signalempfänger D und einen Analog-Digital-Wandler W an den Mikrocomputer MC angeschlossen.

Die Ansteuerung des Mikrocomputers MC erfolgt über einen Starteingang St.

Die Funktionsweise der dargestellten Meßeinrichtung ME bei der Durchführung der Messung der optimalen Gabelübergangsdämpfung ist folgende:

Es wird zunächst,gesteuert vom Mikrocomputer MC aus, vom Signalgenerator P ein Prüfsignal mit vorgegebenem konstantem Signalpegel in den Nebenzweig Gla der Gabelschaltung Gl gegeben. Gleichzeitig wird am Nachbildungsnetzwerk NB1 vom Mikrocomputer MC aus eine bestimmte vorgegebene Kombination aus den Widerständen R1 bis R4 und den Kondensatoren C1 bis C4 über die ansteuerbaren Schaltelemente SR1 bis SR4 und SC1 bis SC4 eingestellt. Der größte Anteil des vom Signalgenerator P abgegebenen Signalpegels soll über die Gabelschaltung Gl in den bidirektionalen Zweig der Gabelschaltung Glc und damit zur Fernmeldeleitung FL laufen. Ein gewisser Anteil des Signalpegels wird infolge der begrenzten Gabelübergangsdämpfung in den anderen Nebenzweig Glb geleitet. Dieser Anteil des Signalpegels wird vom Spitzenwertgleichrichter D empfangen und dem Analog-Digital-Wandler zugeführt, der den Signalwert in einen Digitalwert umwandelt und dem Mikrocomputer MC zuführt. Es wird nun taktweise die am Nachbildungsnetzwerk NB1 eingestellte Kombination aus Widerstandswerten und Kapazitätswerten verändert und jeweils der in den Nebenzweig Glb der Gabelschaltung Gl übertretende Signalpegel gemessen und der Meßwert in der oben beschriebenen Weise dem Mikrocomputer MC zugeführt. Dort werden jeweils zwei aufeinanderfolgende Meßwerte miteinander verglichen und der kleinere von beiden wird gespeichert. Auf diese Weise wird schließlich nach einer vorgegebenen Anzahl von Messungen der Minimalwert eines gemessenen Signalpegelanteils ermittelt. Diesem Minimalwert des gemessenen Signalpegelanteils entspricht eine ganz bestimmte, am Nachbildungsnetzwerk NB1 eingestellte Kombination aus den Widerständen R1 bis R4 und den Kondensatoren C1 bis C4. Die dem minimalen Meßwert des Signalpegelanteils entsprechende Kombination wird ebenfalls gespeichert. Aus dem Minimalwert des gemessenen Signalpegelanteils wird die optimale Gabelübergangsdämpfung vom Mikrocomputer MC berechnet.

Die Meßeinrichtung ME weist eine Anzeigevorrichtung GÜ zur Anzeige der optimalen Gabelübergangsdämpfung auf, sowie eine Anzeigevorrichtung I zur Anzeige des dieser optimalen Gabelübergangsdämpfung zugeordneten Impedanzwertes. Die Angabe des Impedanzwertes kann in codierter Form, beispielsweise als zweistellige HEX-Zahl erfolgen.

Der Meßvorgang kann durch einen Taster T ausgelöst werden, bei dessen Betätigung dem Mikrocomputer MC über den Eingang St das Startsignal zugeführt wird.

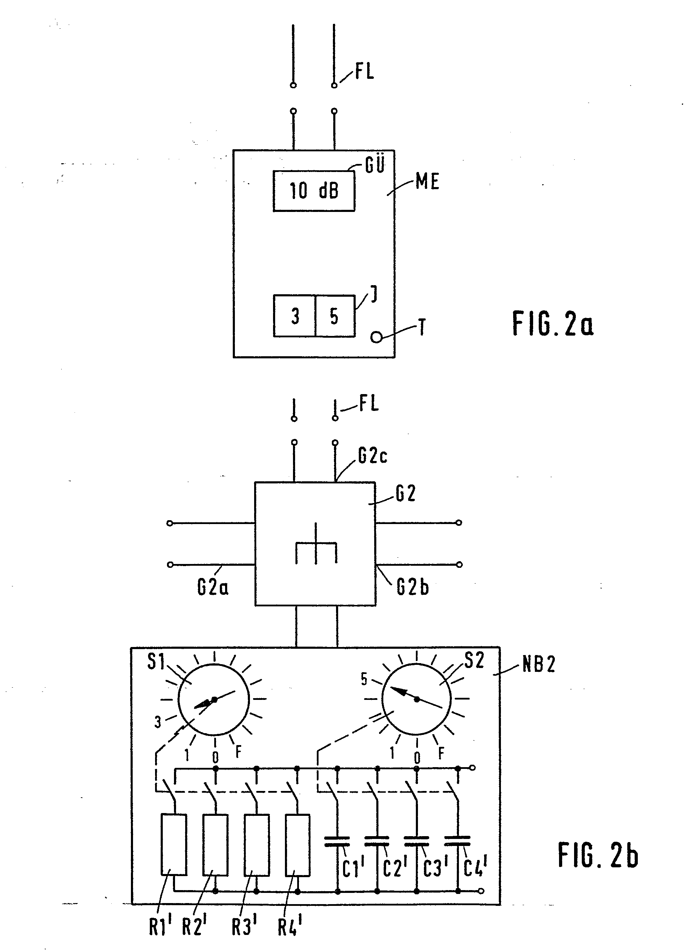

Der an der Anzeigevorrichtung I der Meßeinrichtung ME abgelesene Wert für die einzustellende Impedanz wird nach Durchführung der Messung an einem Nachbildungsnetzwerk NB2 eingestellt, welches in Fig. 2b dargestellt ist und mit dem die Gabelschaltung G2, welche optimal an die Fernmeldeleitung FL angepaßt werden soll, an der ihrem bidirektionalen Hauptzweig G2c gegenüberliegenden Seite abgeschlossen wird. An die beiden Nebenzweige G2a und G2b der Gabelschaltung G2 kann dann in an sich bekannter und nicht eigens dargestellter Weise, beispielsweise eine bidirektionale Verstärkerschaltung, angeschlossen sein.

Die Gabelschaltung G2 entspricht in ihrem Typ genau der Gabelschaltung G1, die in der Meßeinrichtung ME angeordnet ist.

Weiterhin entspricht das Nachbildungsnetzwerk NB2 im Hinblick auf die einstellbaren Impedanzwerte genau dem Nachbildungsnetzwerk NB1, das in der Meßeinrichtung ME angeordnet ist.

Zu diesem Zweck weist das Nachbildungsnetzwerk NB2 vier Widerstände R1' bis R4' und vier Kondensatoren C1' bis C4' auf, die alle zueinander parallelgeschaltet sind. Dabei entspricht der Widerstand R1' des Nachbildungs- netzwerkes NB2 dem Widerstand R1 des Nachbildungsnetz- werkes NB1 usw. Durch Parallelschaltung der Widerstände R1' bis R4' bzw. der Kondensatoren C1' bis C4' können jeweils verschiedene Widerstandswerte bzw. Kapazitätswerte eingestellt werden. Die Einstellung der verschiedenen Widerstands- bzw. Kondensatorkombinationen erfolgt durch zwei Schalter S1 und S2. Der Schalter S1 ist den Widerständen, der Schalter S2 den Kondensatoren zugeordnet. An jedem der Schalter S1 und S2 sind 16 Einstellungen entsprechend den HEX-Zahlen 0 bis F möglich. Jede der HEX-Zahlen 0 bis F entspricht einer der 16 möglichen Einstellungen der Kombination von vier parallelgeschalteten Widerständen bzw. Kondensatoren.

Es braucht also beim Anschluß des Nachbildungsnetzwerkes NB2 an die Gabelschaltung G2 lediglich an der Anzeigevorrichtung I der Meßeinrichtung ME der codierte Impedanzwert abgelesen werden, der dann mittels der Schal-

0155571

ter S1 und S2 am Nachbildungsnetzwerk NB2 eingestellt werden kann. Im dargestellten Ausführungsbeispiel zeigt beispielsweise die Anzeigevorrichtung I den Zahlenwert "35" in HEX-Zahlen an. An den Schaltern S1 und S2 des Nachbildungsnetzwertes NB2 wird nunmehr die HEX-Zahl 3 mittels des Schalters S1 und die HEX-Zahl 5 mittels des Schalters S2 eingestellt, womit automatisch die Kombination der Widerstände R1' bis R4' und Kondensatoren C1' bis C4' eingestellt ist, die auch in der Meßeinrichtung ME mit den Widerständen R1 bis R4 und den Kondensatoren C1 bis C4 als optimale Kombination ermittelt wurde.

Bei dieser Einstellung ist die Gabelschaltung G2 optimal an die Fernmeldeleitung FL angepaßt.

Die in Fig. 1 und Fig. 2b dargestellten Ausführungsbeispiele der Nachbildungsnetzwerke NB1 und NB2 sind vereinfacht dargestellt. Bei praktischen Ausführungen ist im allgemeinen zu jedem der Kondensatoren C1 bis C4 bzw. C1' bis C4' ein Widerstand in Serie geschaltet. Diese Widerstände können bei dem Nachbilduungsnetzwerk NB1 auch durch die inneren Widerstände der ansteuerbaren Schaltelemente gegeben sein.

Selbstverständlich können die Nachbildungsnetzwerke auch mit einer anderen Kombination von Schaltelementen aufgebaut sein und es können insbesondere auch zusätzlich Induktivitäten beim Aufbau des Nachbildungsnetzwerkes verwendet werden.

Die Anzeige der maximalen Gabelübergangsdämpfung an der Anzeigevorrichtung GÜ der Meßeinrichtung ME bietet zusätzlich die vorteilhafte Möglichkeit, in einer bidirektionalen Verstärkerschaltung, wie sie weiter oben beschrieben wurde, den optimalen Verstärkungsgrad einzustellen. Bei einer, wie in Fig. 2a dargestellten gemessenen Gabelübergangsdämpfung von 10dB könnte die Gesamtverstärkung der bidirektionalen Verstärkerschaltung auf 18 dB eingestellt werden entsprechend der Forderung, daß die Gesamtverstärkung um mindestens 2dB unter dem zweifachen Wert der Gabelübergangsdämpfung bleiben soll.

Selbstverständlich kann die Meßeinrichtung ME auch so ausgelegt sein, daß die Anzeigevorrichtung GÜ sogleich den einstellbaren Verstärkungsgrad an der bidirektionalen Verstärkerschaltung anzeigt.

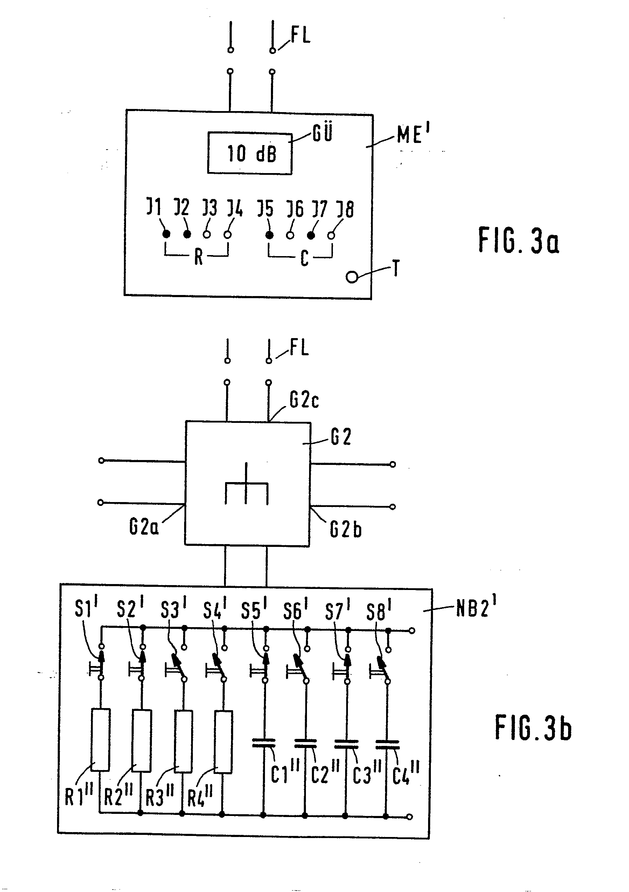

In den Fig. 3a und 3b ist eine Variante der Gesamteinrichtung dargestellt, bei der die Meßeinrichtung ME' und das an die Gabelschaltung G2 anzuschließende Nachbildungsnetzwerk NB2' in ihrem konstruktiven und äußeren Aufbau etwas anders ausgebildet sind als bei der Ausführungsform nach den Fig. 2a und 2b.

Der Meßvorgang verläuft grundsätzlich genauso wie anhand von Fig. 1 beschrieben. Die Anzeigevorrichtung an der Meßeinrichtung ME' weist insgesamt acht Leuchtdioden I1 bis I8 in einer Reihe angeordnet auf. Die Leuchtdioden I1 bis I4 sind den Widerständen R1 bis R4 und die Leuchtdioden I5 bis I8 den Kondensatoren C1, C4 zugeordnet. Im Nachbildungsnetzwerk NB2' befinden sich entsprechend die Widerstände R1'' bis R4'' und die Kondensatoren C1'' bis C4''. Weiterhin erfolgt im Nachbildungsnetzwerk NB2' die Parallelschaltung der Widerstände und Kondensatoren durch Einzelschalter S1' bis S8'. Derartige Einzelschalter sind in sehr kleiner und einfacher Bauart an sich bekannt.

Durch die Leuchtdioden I1 bis I8 wird nun direkt angezeigt, welcher der Schalter S1' bis S8' am Nachbildungsnetzwerk NB2' zu schließen ist, um den gewünschten
Impedanzwert einzustellen.

In Fig. 3a ist eine Einstellung dargestellt, bei der die
Leuchtdioden I1, I2 sowie I5 und I7 aufleuchten. Dies
entspricht dem in Fig. 2a als HEX-Zahl angegebenen Wert
"35". Entsprechend der Ablesung an den Leuchtdioden I1
bis I8 werden an dem in Fig. 3b dargestellten Nachbildungsnetzwerk NB2' die Schalter S1', S2' sowie S5' und
S7' geschlossen und damit der gewünschte Impedanzwert
eingestellt.

Auch bei dem in Fig. 3b dargestellten Nachbildungsnetzwerk können in der Praxis zu den Kondensatoren C1'' bis
C$_\rightarrow$'' widerstände in Serie geschaltet sein.

Patentansprüche:

1. Einrichtung zur optimalen Anpassung einer Gabelschaltung an eine Fernmeldeleitung, bei der die mit ihrem bidirektionalen Hauptzweig an die Fernmeldeleitung angeschlossene Gabelschaltung an ihrer dem Hauptzweig gegenüberliegenden Seite mit einem Nachbildungsnetzwerk mit einstellbarer Impedanz abschließbar ist, dadurch gekennzeichnet, daß sie eine direkt an die Fernmeldeleitung (FL) anschließbare Meßeinrichtung (ME) aufweist, die folgende Einrichtungsteile enthält:

    a) eine Gabelschaltung (G1), die mit der an die Fernmeldeleitung (FL) anzupassenden Gabelschaltung (G2) hinsichtlich ihrer Übertragungseigenschaften vergleichbar ist, deren bidirektionaler Hauptzweig (G1c) an die Fernmeldeleitung anschließbar ist und die an ihrer dem Hauptzweig (G1c) gegenüberliegenden Seite mit einem Nachbildungsnetzwerk (NB1) abgeschlossen ----------------------

ist, das variable, ansteuerbare Impedanzen (R1 bis R4, C1 bis C4) enthält;

b) einen Mikrocomputer (MC), der mit Steuerelementen (SR1 bis SR4, SC1 bis SC4) der variablen, ansteuerbaren Impedanzen (R1 bis R4, C1 bis C4) des Nachbildungsnetzwerkes (NB1) verbunden ist und dessen Steuersignale den Wert der Gesamtimpedanz des Nachbildungsnetzwerkes (NB1) in vorgegebener Weise ändern;

c) einen an den einen Nebenzweig (G1a) der Gabelschaltung (G1) angeschlossenen, vom Mikrocomputer (MC) her ansteuerbaren Signalgenerator (P) zur Abgabe eines Prüfsignals mit konstantem Signalpegel in diesen Nebenzweig (G1a);

d) einen an den anderen Nebenzweig (G1b) der Gabelschaltung (G1) angeschlossenen Signalempfänger (D) zur Messung des in Abhängigkeit von der Gabelübergangsdämpfung in diesen Nebenzweig (G1b) übertretenden Anteils des Signalpegels und zur Erzeugung eines vom gemessenen Signalpegelanteil abhängigen Steuersignals, das über einen Analog-Digital-Wandler (W) dem Mikrocomputer (MC) zugeführt wird zum Vergleich aufeinanderfolgender Meßwerte, zur Speicherung des Minimalmeßwertes und des zugeordneten Wertes der Gesamtimpedanz des Nachbildungsnetzwerkes (NB1) und zur Berechnung der Gabelübergangsdämpfung;

e) Anzeigevorrichtungen (GÜ, I) zur Anzeige der minimalen Gabelübergangsdämpfung und des optimalen Wertes der Gesamtimpedanz des Nachbildungsnetzwerkes (NB1).

2. Einrichtung nach Anspruch 1, dadurch gekennzeichnet, daß das in der Meßeinrichtung (ME) angeordnete Nachbildungsnetzwerk (NB1) eine vorgegebene Anzahl zueinander parallelgeschalteter ohmscher Widerstände (R1 bis R4) und Kondensatoren (C1 bis C4) aufweist, wobei in der Zuleitung zu jedem der Widerstände und jedem der Kondensatoren ein steuerbares Schaltelement (SR1 bis SR4, SC1 bis SC4) angeordnet ist.

3. Einrichtung nach Anspruch 2, dadurch gekennzeichnet, daß dem in der Meßeinrichtung (ME) angeordneten Nachbildungsnetzwerk (NB1) ein Nachbildungsnetzwerk (NB2) mit einstellbarer Impedanz zum Abschluß der an die Fernmeldeleitung (FL) anzupassenden Gabelschaltung (GS2) zugeordnet ist, das die gleiche Anzahl parallelgeschalteter Widerstände (R1' bis R4') und Kondensatoren (C1' bis C4') aufweist, wie das in der Meßeinrichtung (ME) angeordneten Nachbildungsnetzwerk (NB1), wobei die Kombination dieser Widerstände (R1' bis R4') und Kondensatoren (C1' bis C4') von Hand einstellbar ist.

4. Einrichtung nach einem der Ansprüche 1 bis 3, dadurch gekennzeichnet, daß als Signalempfänger ein Spitzenwertgleichrichter (D) dient.

5. Einrichtung nach einem der Ansprüche 1 bis 4, dadurch gekennzeichnet, daß als Signalgenerator ein Tonfrequenzgenerator (P) dient.

6. Einrichtung nach Anspruch 5, dadurch gekennzeichnet, daß der Tonfrequenzgenerator aufeinanderfolgende Signale unterschiedlicher Frequenz abgibt.

7. Einrichtung nach Anspruch 5, dadurch gekennzeichnet, daß der Tonfrequenzgenerator ein aus einem vorgegebenen Frequenzspektrum bestehendes Signal abgibt.

8. Einrichtung nach einem der Ansprüche 1 bis 4, dadurch gekennzeichnet, daß als Signalgenerator ein Rauschgenerator dient.

9. Einrichtung nach Anspruch 3, dadurch gekennzeichnet, daß das Nachbildungsnetzwerk (NB1) in der Meßeinrichtung (ME) und das zugeordnete Nachbildungsnetzwerk (NB2) jeweils aus je vier zueinander parallelgeschalteten Widerständen und vier Kondensatoren mit unterschiedlichen Widerstandswerten bzw. Kapazitäten aufgebaut ist.

10. Einrichtung nach Anspruch 9, dadurch gekennzeichnet, daß sich die Widerstandswerte bzw. die Kapazitätswerte wie 1:2:4:8 verhalten.

FIG.1

0155571

FL

GÜ

10 dB

ME

J

3 | 5

T

FIG. 2a

FL

G2c

G2

G2a

G2b

S1

S2

NB2

3

1    0    F

5

1    0    F

C1'  C2'  C3'  C4'

R1'  R2'  R3'  R4'

FIG. 2b

0155571

FIG.3a

FIG.3b